# EUROPÄISCHE PATENTSCHRIFT

(11) **EP 3 900 919 B1**
(45) Veröffentlichungstag und Bekanntmachung des Hinweises auf die Patenterteilung: **04.09.2024**
(21) Anmeldenummer: 21168928.6
(22) Anmeldetag: 16.04.2021
(51) Int. Cl.: B29C 70/38, B29C 70/54, G01N 21/84

(54) **VERFAHREN UND VORRICHTUNG ZUM ERKENNEN VON FEHLSTELLEN AN FASERMATERIALIEN**
DEVICE AND METHOD FOR DETECTING DEFECTS IN FIBROUS MATERIALS
PROCÉDÉ ET DISPOSITIF DE DÉTECTION DES DÉFAUTS SUR DES MATIÈRES FIBREUSES

(30) Priorität: 23.04.2020 DE 102020111106
(43) Veröffentlichungstag der Anmeldung: 27.10.2021
(73) Patentinhaber: Deutsches Zentrum für Luft- und Raumfahrt e.V., 53227 Bonn-Oberkassel (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- WO-A1-2016/088024
- DE-A1- 102013 112 260
- US-A1- 2002 141 632
- US-A1- 2007 229 805

## Beschreibung

Die Erfindung betrifft ein Verfahren zum Erkennen von Fehlstellen von auf einem Werkzeug abgelegten Fasermaterialien eines Faserverbundwerkstoffes zur Herstellung eines Faserverbundbauteils. Die Erfindung betrifft ebenso eine Erkennungsvorrichtung hierzu.

Die Erfindung betrifft außerdem ein Verfahren zum Ablegen von Fasermaterial eines Faserverbundwerkstoffes auf einem Werkzeug zur Herstellung eines Faserverbundbauteils. Die Erfindung betrifft ebenso eine Faserlegeanlage hierzu.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Bei der Herstellung eines Faserverbundbauteils wird dabei ein das Fasermaterial des Faserverbundwerkstoffes einbettendes Matrixmaterial meist unter Temperatur- und Druckbeaufschlagung ausgehärtet bzw. konsolidiert und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Neben trockenen Fasermaterialien, die in einem anschließenden Infusionsprozess mit dem Matrixmaterial infundiert werden, werden oftmals auch bereits vorimprägnierte Fasermaterialien (sogenannte Prepregs) verwendet, bei denen das Fasermaterial mit dem Matrixmaterial bereits vorimprägniert ist. Ein anschließender Infusionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet und so dem Bauteil die spätere Bauteilform verleiht.

Gerade in der Luft- und Raumfahrt sowie im Automobilbereich besteht jedoch die Bestrebung, möglichst viele Bauelemente aus einem Faserverbundwerkstoff in derselben Produktion herstellen zu können, um so die Stückkosten zu reduzieren, damit Faserverbundbauelemente in komplexen Bauteilen oder Gütern, die in hohen Stückzahlen gefertigt werden, zu etablieren. Aber auch bei großen Bauelementen, wie beispielsweise Flügelschalen von Flugzeugen oder Rotorblättern von Windkraftanlagen, ist ein automatisierter Herstellungsprozess wünschenswert, da derartige Großbauteile sehr hohe personelle Kosten verursachen, wenn der Herstellungsprozess, insbesondere das Ablegen der Fasern, händisch erfolgt.

Zur Herstellung von großskalligen Strukturbauteilen, wie beispielsweise Flügelschalen von Verkehrsflugzeugen, werden zur Optimierung des Ablegeverfahrens automatisierte Faserlegeprozesse verwendet, bei denen mit Hilfe einer Fertigungsanlage und mindestens einem Faserlegekopf der Fertigungsanlage ein dem Faserlegekopf zugeführtes Fasermaterial auf das Werkzeug gedrückt und somit abgelegt wird. Bei der sogenannten Fiber Placement Technologie werden beispielsweise vorimprägnierte Fasermaterialien bahnweise auf dem Formwerkzeug mit Hilfe eines solchen Faserlegekopfes abgelegt. Der Faserlegekopf ist dabei an einem Roboter angeordnet und kann gegenüber dem Formwerkzeug relativ bewegt werden. Hierdurch können die einzelnen Faserbahnen auf der Werkzeugoberfläche schließlich abgelegt werden. Bei der Fiber Placement Technologie werden gleichzeitig mehrere, meist acht, sechzehn oder zweiunddreißig schmale Materialstreifen, sogenannte Tows, auf dem Werkzeug abgelegt. Im Gegensatz hierzu werden bei der Fiber Tape Laying Technologie meist breite Faserbahnen (auch Tapes genannt) in der Regel 150 mm, 300 mm oder 600 mm breit mit einer Dicke von wenigen zehntel Millimeter mit Hilfe des Faserlegekopfes auf dem Formwerkzeug abgelegt.

Eine solche Faserlegeanlage mit einem zum Ablegen von Fasermaterialien vorgesehenen Faserlegekopf ist beispielsweise aus der DE 10 2010 015 027 A1 bekannt. Bei dieser Faserlegeanlage werden Roboter auf einem umlaufenden Schienensystem geführt, die jeweils einen Ablegekopf haben, um das Fasermaterial auf einem in der Mitte des umlaufenden Schienensystems vorgesehenen Werkzeug ablegen zu können.

Derartige Faserlaminate, gerade bei großskalligen Strukturbauteilen, bestehen nicht selten aus mehreren Einzellagen, die je nach Anwendungsgebiet des Bauteils auch mehr als einhundert Lagen aufweisen können. Zur Gewährleistung einer hohen Bauteilqualität muss die Anzahl auftretender Prozessfehler bei der Ablage des Fasermaterials (beispielsweise Tapes oder Tows) minimiert oder gänzlich verhindert werden. Das Auftreten von Prozessfehlern beziehungsweise Fertigungsabweichungen mit großem negativem Einfluss auf die Festigkeit der Bauteilstruktur muss nach Möglichkeit vollständig im Prozess erkannt und gegebenenfalls korrigiert werden.

Aus der Praxis ist die manuelle Inspektion bekannt und stark verbreitet. In Abhängigkeit von der Laminatgröße, der Mitarbeiterverfügbarkeit sowie der Fehlerhäufigkeit innerhalb einer Laminatschicht werden im Mittel etwa 15 bis 30 Minuten benötigt, um die Ablage einer Laminatschicht im Hinblick auf Fertigungsabweichungen zu untersuchen. Unter Fertigungsabweichungen werden hierbei Ablagefehler verstanden, die im späteren hergestellten Bauteil zu Fehlstellen und Strukturschwächungen führen können. Bei Flügelschalen von Kurzstreckenflugzeugen kann die Anzahl einzelner Laminatschichten bis zu 400 betragen, woraus sich 6.000 bis 12.000 Minuten Anlagestillstand pro Anlagebauteil ergeben, die auf die händische Inspektion der automatisierten Ablage zurückzuführen sind. Ebenso ist die Inspektion durch einen Werker stark vom Erfahrungsgrad abhängig und darüber hinaus nicht in dem Maße qualitativ ausreichend, wie es die Fertigungstoleranz eigentlich erfordert. Als Beispiel ist ein zulässiger Abstand zwischen zwei Materialbahnen von einem Millimeter genannt, der qualitativ nur unter Anwendung von Hilfsmitteln und dies auch nur stichpunktartig untersucht werden kann.

Es wurden daher zur Verbesserung der qualitativen Überprüfung der Faserlaminate messtechnische Erfassungssysteme entwickelt, wie sie beispielsweise aus der DE 10 2013 112 260 A1, DE 10 2013 104 545 A1 sowie DE 10 2013 104 546 A1 aus dem Hause des Anmelders bekannt sind. Bei diesen messtechnischen Erfassungssystemen werden Fehlstellen von auf einer Werkzeugoberfläche abgelegter Faserhalbzeuge beziehungsweise Fasermaterialien erkannt, in dem mittels eines optischen Lichtprojektionsverfahrens, bei dem das abgelegte Fasermaterial mit einer Lichtquelle aus einem ersten Winkel beleuchtet und das von der Faseroberfläche reflektierte Licht aus einem anderen Winkel aufgenommen wird, ein Höhenprofil der Faserhalbzeugoberfläche erstellt wird, das dann mit Hilfe einer Bildauswerteeinheit untersucht und analysiert wird. Aus den Höhenprofilen lassen sich nämlich aufgrund der charakteristischen Abweichung der einzelnen Prozessfehler die Fehlstellen in den abgelegten Fasermaterialien detektieren. Dabei kann unter anderem vorgesehen sein, dass das Ermitteln des Höhenprofils mit Hilfe des Lichtschnittverfahrens sowie der Ermittlung von Fehlstellen aus diesen Höhenprofilen im Nachgang zum Ablegeprozess stattfindet, so dass Fertigungsabweichungen aktuell abgelegter Fasermaterialien (beispielsweise aktuell abgelegter Fasermaterialbahnen) sofort erkannt werden können.

In Ergänzung hierzu ist aus der DE 10 2017 116 036 A1 bekannt, dass das zuvor ermittelte Höhenprofil der Fasermaterialoberfläche in eine Mehrzahl von Teilbereichen unterteilt wird, wobei zunächst für jeden Teilbereich eine statistische Abweichung der Höhenniveaus ermittelt, um so potentielle Fehlstellen zu erkennen. Anschließend werden nur diejenigen Teilbereiche, in denen eine potentielle Fehlstelle zuvor erkannt wurde, intensiv untersucht.

Hierdurch wird messtechnische Erfassung von Fertigungsabweichungen (beispielsweise Ablegefehler) im Nachlauf des Ablegeprozesses möglich, um ein nachgelagertes Qualitätssicherungssystem zu erhalten. So können Fehler erkannt und gegebenenfalls ausgebessert werden. Außerdem ist eine Dokumentation der Bauteilherstellung möglich.

Eine andere, aus der DE 10 2018 124 079 A1 bekannte Möglichkeit zum Ermitteln von Fehlstellen an auf einem Werkzeug abgelegten Fasermaterialien ist das Aufnehmen der Fasermaterialoberfläche der abgelegten, vorimprägnierten Fasermaterialien durch einen Bildsensor außerhalb des sichtbaren Lichtspektrums. Hierdurch können Ablagerungen von Matrixmaterial an den vorimprägnierten Fasermaterialien, die unbedenklich sind, von ernsthaften Fehlstellen unterschieden werden.

Aufgrund der Integration derartiger Messsysteme in die aktive Faserablage mithilfe von Faserlegeanlagen, insbesondere im Nachlauf von Ablegeköpfen, ergibt sich das Problem, dass die aus den Messsystemen stammenden Bilddaten oftmals unzureichend sind, um prozesssicher durch eine automatisierte Bildanalyse Fehlstellen erkennen zu können. Dies kann mehrere Ursachen haben. Zum einen können die Beleuchtungsverhältnisse nicht optimal sein. Aufgrund des diffusen Rückstrahlverhaltens von vorimprägnierten Kohlenstoff-Fasermaterialien können oftmals keinerlei nutzbare Informationen aus den Bilddaten gewonnen werden. Ein weiteres Problem liegt in der Verzerrung des Meßbildes, was aus einer Relativneigung des Bildsensors gegenüber der Fasermaterialoberfläche beim Ablegen der Fasermaterialien resultiert. Auch hier besteht die Gefahr, dass Fehlstellen entweder nicht erkannt oder fehlerfreie Bereiche fälschlicherweise als Fehlstellen detektiert werden.

Aus der US 2002/0141632 A1 ist ein Verfahren und eine System zum Erkennen von Fehlstellen auf abgelegten Fasermaterialien bekannt. Dabei wird mithilfe einer Lichtquelle das Fasermaterial beleuchtet und dann das reflektierte Licht durch ein Kamerasystem aufgenommen. Durch unterschiedliche Winkel beim Beleuchten der Fasermaterialoberfläche soll dabei auf das diffuse Rückstrahlverhalten der Fasermaterialoberfläche Rücksicht genommen werden.

Aus der WO 2016/088024 A1 ist ebenfalls ein Verfahren und ein System zum Erkennen von Fehlstellen auf Oberflächen bekannt, wobei auch hier das von der Oberfläche reflektierte Licht aufgenommen und hinsichtlich der Fehlererkennung verarbeitet wird. Dabei erfolgt, wie in Absatz [0051] beschrieben ist, eine Farbumkehrung, um den Kontrast im Bild zu erhöhen und so die Fehlererkennung zu verbessern.

Aus der US 2007/0229805 A1 ist ebenfalls ein Verfahren zum Erkennen von Fehlstellen auf abgelegten Fasermaterialien bekannt, wobei auch hier die Fasermaterialoberfläche durch eine Kamerasystem aufgenommen wird.

Aus der DE 10 2013 112 260 A1 ist ein Verfahren zum Erkennen von Fehlstellen auf einer Fasermaterialoberfläche mithilfe eines optischen Lichtprojektionsverfahrens bekannt.

Es ist daher Aufgabe der vorliegenden Erfindung ein verbessertes Verfahren und eine verbesserte Vorrichtung zum Erkennen von Fehlstellen an abgelegten Fasermaterialien zur Herstellung von Faserverbund-Bauteilen anzugeben.

Die Aufgabe wird mit dem Verfahren gemäß Anspruch 1 sowie der Vorrichtung gemäß Anspruch 11 zum Erkennen von Fehlstellen erfindungsgemäß gelöst. Vorteilhafte Ausgestaltungen der Erfindung finden sich in den entsprechenden Unteransprüchen.

Gemäß Anspruch 1 wird ein Verfahren zum Erkennen von Fehlstellen von auf einem Werkzeug abgelegten Fasermaterialien eines Faserverbundwerkstoffes zur Herstellung eines Faserverbundbauteils vorgeschlagen, wobei gattungsgemäß zunächst die Fasermaterialoberfläche der auf dem Werkzeug abgelegten Fasermaterialien mithilfe einer bildbasierten Aufnahmevorrichtung aufgenommen wird. Die bildbasierte Aufnahmevorrichtung weist hierfür mindestens einen Bildaufnahmesensor auf, der auf die Fasermaterialoberfläche ausgerichtet ist und zum Aufnehmen der Fasermaterialoberfläche ausgebildet ist. Durch das Aufnehmen der Fasermaterialoberfläche mittels der bildbasierten Aufnahmevorrichtung werden dabei digitale Bilddaten der aufgenommenen Fasermaterialoberfläche generiert.

Anschließend werden die digitalen Bilddaten erfindungsgemäß mittels einer Bildverarbeitungseinheit normalisiert. Dabei wird die Varianz einer Häufigkeitsverteilung von farb-, kontrast- und/oder helligkeitsbezogenen Bildmerkmalen der aufgenommenen digitalen Bilddaten vergrößert und normalisierte Bilddaten erzeugt. Basierend auf den so normalisierten Bilddaten, die gegebenenfalls noch weiteren Anpassungen Schritten unterliegen können, werden nun Fehlstellen an dem abgelegten Fasermaterial durch eine Bildanalyse der normalisierten Bilddaten mittels einer Auswerteeinheit in an sich bekannter Weise erkannt.

Die Normalisierung bewirkt eine Egalisierung bzw. Angleichung von Unterschieden in den digitalen Bilddaten, die aufgrund von technischen Gegebenheiten bei der Erfassung der Fasermaterialoberfläche entstehen und einen Einfluss auf die Fehlererkennung haben. So können Helligkeitsunterschiede, welche durch eine Verkippung oder Krümmung des Untergrundes, auf dem das Fasermaterial abgelegt wurde, entstehen und eigentlich einen nur sehr geringen Einfluss auf das Messbild haben, angeglichen, wodurch die Fehlererkennung aus dem Messbild deutlich verbessert werden kann.

Gemäß einer Ausführungsform ist vorgesehen, dass ein Höhenprofil der Fasermaterialoberfläche mittels eines optischen Lichtprojektionsverfahrens durch die hierzu ausgebildete bildbasierte Aufnahmevorrichtung in Form eines Farbtiefenbildes oder Graustufenbildes als digitale Bilddaten ermittelt wird, bei dem ein Höhenniveau des Höhenprofils durch einen entsprechenden Farb-, Kontrast- und/oder Helligkeitswert repräsentiert wird.

Gemäß einer Ausführungsform hierzu ist vorgesehen, dass das optische Lichtprojektionsverfahren ein Lichtschnittverfahren ist, bei dem die Fasermaterialoberfläche mit Licht einer Lichtquelle aus einer ersten Richtung beleuchtet, das von der Fasermaterialoberfläche reflektierte Licht aus einer anderen, zweiten Richtung mit einer Kamera aufgenommen und das Höhenprofil dann in Abhängigkeit von dem reflektierten Licht ermittelt wird.

Durch das Beleuchten der Fasermaterialoberfläche unter einem definierten Winkel und Aufnehmen des reflektierten Lichtes unter einem definierten anderen Winkel können je nach Feinstrukturierung des Beleuchtungslichtes jegliche Profilierungen der Fasermaterialoberfläche der abgelegten Fasermaterialien erfasst werden, so dass sich ein hochgenaues Höhenprofil der Fasermaterialoberfläche der abgelegten Fasermaterialien ergibt. Die Beleuchtung kann dabei mittels abgrenzender Punkte, Linien, Streifen oder sonstiger definierter Hell/Dunkel-Muster erfolgen und ist in der Regel auf einen bestimmten Bereich begrenzt. Vorteilhafterweise handelt es sich beim ausgesendeten Licht um ein Laserlicht, das in Form einer geraden Linie unter einem entsprechenden Winkel auf die Fasermaterialoberfläche projiziert wird, so dass durch die daraus entstehenden Abweichungen von der geraden Linie die Höhenniveaus des Höhenprofils abgeleitet werden können. Sowohl die Beleuchtung der Fasermaterialoberfläche als auch das Aufnehmen des reflektierten Lichtes erfolgt dabei unter einem Winkel, der in Bezug zu der Fasermaterialoberfläche kleiner oder gleich 90° ist. Für Kohlefaser-Prepreg-Material steht der Laser meist senkrecht auf der Materialoberfläche und die Kamera ist verkippt. Für Glasfaser beispielsweise sind beide in gleichem Winkel gegenüber dem Boden verkippt.

Die einzelnen Höhenniveaus der Fasermaterialoberfläche, die sich aus dem so ermittelten Höhenprofil ergeben, werden dann in entsprechende Farb-, Kontrast- und/oder Helligkeitswerte umgewandelt, um so das Höhenprofil in Form eines Farbtiefenbildes oder Graustufenbildes darstellen zu können. Hierdurch ergibt sich der Vorteil, dass das Höhenprofil mithilfe einer Bildanalyse untersuchbar wird.

Durch die Normalisierung können dabei die in dem Messbild enthaltenen Unterschiede, die keinen Einfluss auf eine Fehlererkennung haben, angepasst und egalisiert werden. Ein Messbild, welches bspw. aufgrund eines schiefen Untergrundes auf der rechten Seite weiß und auf der linken Seite dunkel ist, erhält somit eine einheitliche "Tönung" bzw. einheitliche Bildeigenschaften. Höhenunterschiede in einem geometrisch begrenzten Gebiet fallen aber trotzdem stark ins Gewicht und ändern den Helligkeitswert im Messbild. Ein Faserlegefehler wirkt somit heller/dunkler als der Untergrund.

Gemäß einer Ausführungsform ist vorgesehen, dass die Normalisierung der Bilddaten durch eine AHE (adaptive histogram equalization) Bildanpassung, insbesondere durch eine CLAHE (contrast-limited adaptive histogram equalization) Bildanpassung durchgeführt wird.

Gemäß einer Ausführungsform ist vorgesehen, dass vor der Normalisierung die Bilddaten basierend auf einer Dilatationsmatrix morphologisch erweitert werden. Hierdurch wird es möglich, die in den Bilddaten enthaltenen Informationen über die Höhenniveaus so zu erweitern, dass insbesondere nicht nutzbare Höheninformationen eliminiert werden. Dies ist besonders dann vorteilhaft, wenn CFK-Prepreg Materialien untersucht werden, bei denen es aufgrund des diffusen Rückstrahlverhaltens dazu kommen kann, dass eine Mehrzahl von Bildpixel keine nutzbaren Höheninformationen enthalten. Basierend auf einer Dilatationsmatrix werden nun die Bilddaten morphologisch erweitert, sodass Bildpixels, die keine nutzbaren Höheninformationen enthalten (meist gekennzeichnet durch den Wert 0 entsprechend der Farbe schwarz) durch nutzbare Höheninformationen angrenzender Bildpixels ersetzt, ergänzt und/oder interpoliert werden.

Der Vorteil hierbei liegt darin, dass basierend auf den aufgenommenen Bilddaten jene Pixel mit nicht nutzbaren Höheninformationen durch Werte angrenzender Pixel mit nutzbaren Höheninformationen ersetzt werden, sodass Bilddaten mit vollständig nutzbaren Höheninformationen zur weiteren Verarbeitung vorliegen.

Gemäß einer Ausführungsform ist vorgesehen, nach der Normalisierung der Bildinhalt der normalisierten Bilddaten durch Glätten oder Weichzeichnen angepasst wird. Dies kann beispielsweise mithilfe eines Gauß-Filtern in der Bildverarbeitung erfolgen.

Gemäß einer Ausführungsform ist vorgesehen, dass mittels eines zuvor angelernten maschinellen Lernverfahrens als Bildanalyse Fehlstellen an dem abgelegten Fasermaterial erkannt werden. Derartige maschinelle Lernverfahren für die Bildanalyse bieten dabei die Möglichkeit, neben der Fehlererkennung auch eine Kategorisierung des erkannten Fehlers bzw. der erkannten Fehlstelle vorzunehmen, wodurch die Qualitätssicherung verbessert wird.

Gemäß einer Ausführungsform ist vorgesehen, dass Stufen, Überlappungen, Spalten, Verwerfungen, Welligkeiten, Lufteinschlüsse, Fremdkörper, Materialablösungen, Materialansammlungen und/oder Materialfehler als Fehlstellen erkannt werden. Unter einer Fehlstelle im Sinne der vorliegenden Erfindung werden demnach insbesondere Material- und/oder Faserveränderungen des Fasermaterials verstanden, die zu einer mechanischen Beeinträchtigung des Materials bzw. des später hergestellten Bauteils führen.

Gemäß einer Ausführungsform ist vorgesehen, dass Fehlstellen an trockenem Fasermaterial oder an vorimprägniertem Fasermaterial erkannt werden.

Gemäß einer Ausführungsform ist vorgesehen, dass während der Aufnahme der Fasermaterialoberfläche eine Relativbewegung zwischen der Fasermaterialoberfläche und zumindest einem Bildaufnahmesensor der bildbasierten Aufnahmevorrichtung erzeugt wird. Dies kann beispielsweise dadurch geschehen, dass der mindestens eine Bildaufnahmesensor der bildbasierten Aufnahmevorrichtung gegenüber einem feststehenden Formwerkzeug relativ bewegt wird.

Die Aufgabe wird im Übrigen auch mit der Fehlstellenerkennungsvorrichtung zum Erkennen von Fehlstellen von auf einem Werkzeug abgelegten Fasermaterialien eines Faserverbundwerkstoffes zur Herstellung eines Faserverbundbauteils gemäß Anspruch 11 erfindungsgemäß gelöst, wobei die Fehlstellenerkennungsvorrichtung zur Durchführung des vorstehend beschriebenen Verfahrens eingerichtet ist und entsprechend hierzu eine bildbasierte Aufnahmevorrichtung, eine Bildverarbeitungseinheit und eine Auswerteeinheit hierzu aufweist.

Die Aufgabe wird im Übrigen auch mit dem Verfahren zum Ablegen von Fasermaterial eines Faserverbundwerkstoffes auf einem Werkzeug zur Herstellung eines Faserverbundbauteils gemäß Anspruch 12 gelöst, bei dem mittels eines Faserlegekopfes einer Faserlegevorrichtung ein dem Faserlegekopf kontinuierlich zugeführtes Fasermaterial auf dem Werkzeug abgelegt wird. Dabei werden während oder nach dem Ablegen des Fasermaterials mittels des Faserlegekopfes Fehlstellen gemäß dem vorstehend beschriebenen Verfahren erkannt.

Die Aufgabe wird im Übrigen auch mit einer Faserlegeanlage zum Ablegen von Fasermaterial eines Faserverbundwerkstoffes auf einem Werkzeug zur Herstellung eines Faserverbundbauteils gemäß Anspruch 13 gelöst, wobei die Faserlegeanlage mindestens eine einen Faserlegekopf aufweisenden Faserlegevorrichtung hat, die eingerichtet ist, dem Faserlegekopf kontinuierlich ein Fasermaterial zuzuführen, wobei der Faserlegekopf zum Ablegen des kontinuierlich zugeführten Fasermaterials auf einem Werkzeug ausgebildet ist. Die Faserlegeanlage weist erfindungsgemäß eine Fehlstellenerkennungsvorrichtung zum Erkennen von Fehlstellen von auf dem Werkzeug abgelegtem Fasermaterial wie vorstehend beschrieben auf.

Die Erfindung wird anhand der beigefügten Figuren beispielhaft näher erläutert. Es zeigen in einer bevorzugten Ausführungsform:
- Figur 1: schematische Darstellung der erfindungsgemäßen Faserlegeanlage zur Herstellung eines Faserverbundbauteils;
- Figur 2: schematische Darstellung des Prozessablauf zur Fehlererkennung;
- Figur 3: schematische Darstellung der Bildverarbeitungskette für die Vorverarbeitung.

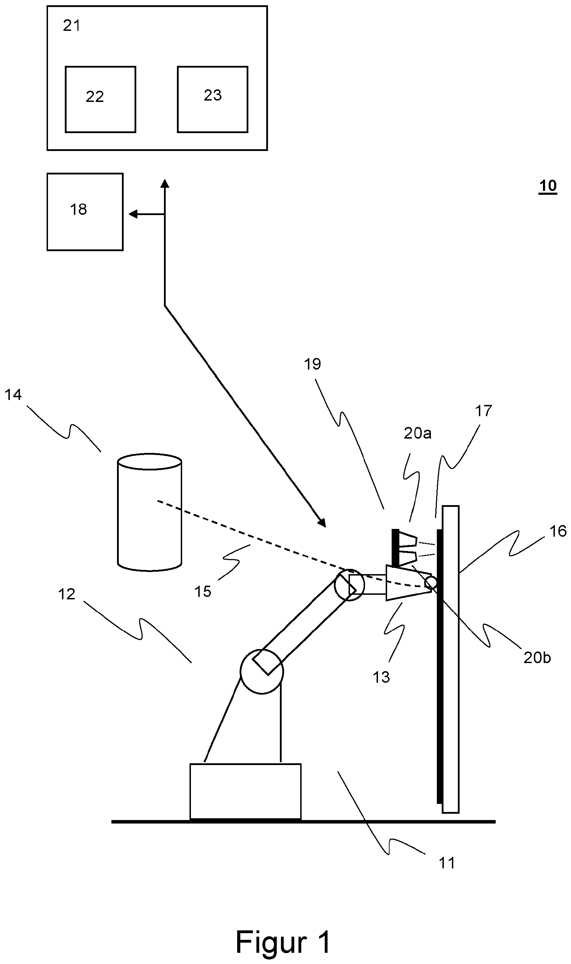

Fig. 1 zeigt in einer schematisch stark vereinfachten Form die wesentlichen Elemente einer Faserlegeanlage 10 zur Herstellung eines Faserlaminates 17. Die Faserlegeanlage 10 weist zunächst mindestens eine robotische Faserlegeeinheit 11 auf, die einen mehrachsigen Bewegungsautomaten 12 hat, an dem als Endeffektor ein Faserlegekopf 13 angeordnet ist. Dem Faserlegekopf 13 wird von einem Fasermagazin 14 während des Ablegeprozesses kontinuierlich ein Fasermaterial 15 zugeführt, dass dann auf einem entsprechenden Formwerkzeug 16 zur Herstellung des Fasermaterials 17 abgelegt wird. Durch kontinuierliches Ablegen des Fasermaterials 15 auf den Formwerkzeug 16 kann so auf dem Werkzeug 16 das Fasermateriallaminat 17 hergestellt werden, dass in der Regel aus mehreren Einzellagen von Fasermaterialien bestehen kann. Mit Hilfe des Faserlegekopfes 13 können dabei Tapes oder Tows als Fasermaterial 15 bahnweise abgelegt werden.

Mit Hilfe einer Steuerung 18, mit der die robotische Faserlegeeinheit 11 kommunizierend in Verbindung steht, wird der Faserlegekopf 13 durch die robotische Faserlegeeinheit 11 so bewegt, dass das Fasermaterial 15 an den vorgegebenen Positionen auf dem Formwerkzeug 16 abgelegt wird.

An dem Faserlegekopf 13 ist eine bildbasierte Aufnahmevorrichtung 19 vorgesehen, die schematisch als zum Faserlegekopf 13 zugehörig angedeutet ist. Im Ausführungsbeispiel der Figur 1 handelt es sich bei der bildbasierten Aufnahmevorrichtung 19 um einen Lichtschnittsensor, der eine Lichtquelle 20a zum Beleuchten der Fasermaterialoberfläche des abgelegten Fasermaterials des Fasermateriallaminates 17 aus einer ersten Richtung hat. Die bildbasierte Aufnahmevorrichtung 19 hat des Weiteren eine Kamera 20b, um das von der Fasermaterialoberfläche reflektierende Licht der Lichtquelle 20a aufnehmen zu können. Basierend hierauf lässt sich dann ein Höhenprofil in Form eines Graustufenbildes oder Farbtiefenbildes durch eine nicht näher dargestellten Recheneinheit der bildbasierten Aufnahmevorrichtung 19 generieren, das dann als digitale Bilddaten an eine mit der bildbasierten Aufnahmevorrichtung 19 kommunizierend in Verbindung stehenden Datenverarbeitungsanlage 21 übertragen wird.

Wird der Faserlegekopf 13 während des Ablegens des Fasermaterials gegenüber dem Werkzeug 16 zur Ablage des Fasermaterials 15 bewegt, so bewegt sich aufgrund der festen Anordnung der Lichtquelle 20a und der Kamera 20b sich diese ebenfalls simultan mit dem Faserlegekopf 13 mit, sodass während der Faserablage fortwährend auch die Fasermaterialoberfläche der bereits abgelegten Fasermaterialien aufgenommen werden kann.

Die Datenverarbeitungsanlage 21 weist eine Bildverarbeitungseinheit 22 und eine Auswerteeinheit 23 auf, mit denen die aufgenommenen digitalen Bilddaten weiterverarbeitet werden. Die Bildverarbeitungseinheit 22 ist dabei vorgesehen, eine Vorverarbeitung der Bilddaten zur Vorbereitung für den Fehlererkennungsprozess durchzuführen nach Abschluss der Vorverarbeitung der Bilddaten werden diese von der Bildverarbeitungseinheit 22 an die Auswerteeinheit 23 übertragen, wo sie dann der Fehlererkennung in an sich bekannter Art und Weise zugrunde gelegt werden.

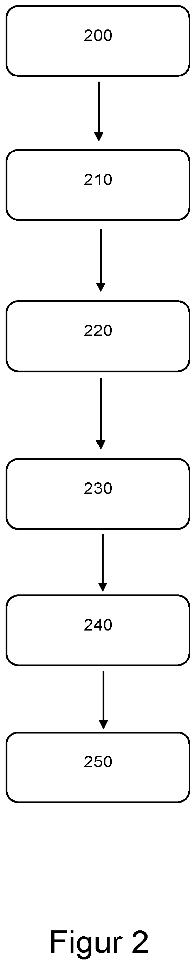

Figur 2 zeigt den grundlegenden Prozessablauf bei einer Fehlererkennung von Fehlstellen auf Fasermaterialien unter Nutzung einer kaskadierten Analyse. Hierbei werden in dem ersten Schritt 200 zunächst die Bilddaten durch ein bildgebendes Verfahren aufgenommen und entsprechende digitale Bilddaten generiert. Anschließend werden diese digitalen Bilddaten einer Vorverarbeitung 210 (Preprocessing) unterzogen, um sie für den weiteren Erkennungsprozess vorzubereiten. Diese so vor verarbeiteten Bilddaten werden dann einer Fehlerdetektion 220 unterzogen, aus der dann im darauffolgenden Schritt 230 Merkmale extrahiert werden, die auf einen Fehler hindeuten. Diese Merkmale werden klassifiziert im Schritt 240, wobei abschließend dann der detektierte Fehler im Schritt 250 vermessen werden kann.

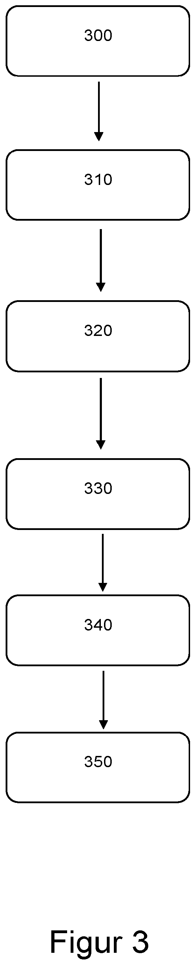

Figur 3 zeigt den grundlegenden Prozessablauf der Vorverarbeitung, wir in Figur 2 im Schritt 210 durchgeführt werden soll. Nach der Aufzeichnung der digitalen Bilddaten werden in einem ersten Schritt 300 zunächst die Kanten des Bildes beschnitten, um unerwünschte Randeffekte zu entfernen.

Anschließend wird im darauffolgenden Schritt 310 ein Dilatiervorgang durchgeführt, bei dem die Bilddaten basierend auf eine Dilatationsmatrix morphologisch erweitert werden. Hierdurch werden Bildpixel ohne Höheninformationen eliminiert und ersetzt durch Bildpixel mit Werten, die aus angrenzenden Bildpixeln gebildet werden. Für die Nutzung bei der Herstellung von Faserverbundbauteilen, im speziellen i.V.m. CFK Prepreg Material, hat sich eine Dilatationsmatrix mit Kernel-Größe k_{size} = 3 x 3 und 8 Iterationsschritten als ausgesprochen günstig herausgestellt.

Im nächsten Schritt 320 wird eine CLAHE Bildanpassung durchgeführt, um die Bilddaten zu normalisieren. Hierbei wird die Varianz einer Häufigkeitsverteilung von farb-, kontrast- und/oder helligkeitsbezogenen Bildmerkmalen der aufgenommenen digitalen Bilddaten vergrößert. Für die Aufbereitung von Bilddaten von CFK Prepreg Fasermaterialien hat sich die Konfiguration mit einer "tiles grid size" t_{size} = 8 x 8 und einem "clip limit" ci = 4.0 als ausgesprochen günstig herausgestellt.

Durch den Dilatationsschritt wird die Bildgröße leicht verändert. Hierzu wird ein entsprechendes Padding in Schritt 330 eingeführt, um die einzelnen Pixel wieder an ihre ursprüngliche Position zurückzuführen. Darauf aufbauend wird das Bild mit dem nun wieder korrekten Kanten-Längen-Verhältnis auf eine für das Auswertesystem günstige Bildgröße im Schritt 340 skaliert. Eine günstige Bildgröße zur Erreichung einer ausreichenden Bildgenauigkeit und Reduktion der Rechenzeit ist für die Inspektion von diffus reflektierenden Faser verbunden 1000 x 1000 Pixel.

Dieses aus dem Schritt 340 stammende Messbild wird abschließend mit einem Gaus-Filter der Größe k_{size} = 5 x 5 mit σ = 0,5 geglättet. Die erfindungsgemäße Vorverarbeitung von Faserverbund-Messbildern ist sodann abgeschlossen und das Analysebild kann anschließend dem Schritt der Fehlererkennung zugeführt werden.

### Bezugszeichenliste

10 Faserlegeanlage
11 robotische Faserlegeeinheit
12 Bewegungsautomat
13 Faserlegekopf
14 Fasermaterialspeicher
15 Fasermaterial
16 Formwerkzeug
17 Faserlaminat
18 Anlagensteuerung
19 bildbasierte Aufnahmevorrichtung
20a Lichtquelle eines Lichtschnittsensors
20b Kamera eines Lichtschnittsensors
21 Datenverarbeitungsanlage
22 Bildverarbeitungseinheit
23 Auswerteeinheit

## Patentansprüche

1. Verfahren zum Erkennen von Fehlstellen von auf einem Werkzeug abgelegten Fasermaterialien (15) eines Faserverbundwerkstoffes zur Herstellung eines Faserverbundbauteils, wobei das Verfahren die folgenden Schritte umfasst:
- Aufnehmen einer Fasermaterialoberfläche des auf dem Werkzeug abgelegten Fasermaterials (15) und Generieren von digitalen Bilddaten der Fasermaterialoberfläche mittels mindestens einer bildbasierten Aufnahmevorrichtung (19);
- Normalisieren der Bilddaten durch Vergrößern der Varianz einer Häufigkeitsverteilung von farb-, kontrast- und/oder helligkeitsbezogenen Bildmerkmalen der digitalen Bilddaten und Erzeugen von normalisierten Bilddaten mittels einer Bildverarbeitungseinheit (22);
- Erkennen von Fehlstellen an dem abgelegten Fasermaterial (15) durch eine Bildanalyse der normalisierten Bilddaten mittels einer Auswerteeinheit (23).

2. Verfahren nach Anspruch 1, **dadurch gekennzeichnet, dass** ein Höhenprofil der Fasermaterialoberfläche mittels eines optischen Lichtprojektionsverfahrens durch die hierzu ausgebildete bildbasierte Aufnahmevorrichtung (19) in Form eines Farbtiefenbildes oder Graustufenbildes als digitale Bilddaten ermittelt wird, bei dem ein Höhenniveau des Höhenprofils durch einen entsprechenden Farb-, Kontrast- und/oder Helligkeitswert repräsentiert wird.

3. Verfahren nach Anspruch 2, **dadurch gekennzeichnet, dass** das optische Lichtprojektionsverfahren ein Lichtschnittverfahren ist, bei dem die Fasermaterialoberfläche mit Licht einer Lichtquelle aus einer ersten Richtung beleuchtet, das von der Fasermaterialoberfläche reflektierte Licht aus einer anderen, zweiten Richtung mit einer Kamera aufgenommen und das Höhenprofil dann in Abhängigkeit von dem reflektierten Licht ermittelt wird.

4. Verfahren nach einem der vorhergehenden Ansprüche, **dadurch gekennzeichnet, dass** die Normalisierung der Bilddaten durch eine AHE (adaptive histogram equalization) Bildanpassung, insbesondere durch eine CLAHE (contrast-limited adaptive histogram equalization) Bildanpassung durchgeführt wird.

5. Verfahren nach einem der vorhergehenden Ansprüche, **dadurch gekennzeichnet, dass** vor der Normalisierung die Bilddaten basierend auf einer Dilatationsmatrix morphologisch erweitert werden.

6. Verfahren nach einem der vorhergehenden Ansprüche, **dadurch gekennzeichnet, dass** nach der Normalisierung der Bildinhalt der normalisierten Bilddaten durch Glätten oder Weichzeichnen angepasst wird.

7. Verfahren nach einem der vorhergehenden Ansprüche, **dadurch gekennzeichnet, dass** mittels eines zuvor angelernten maschinellen Lernverfahrens als Bildanalyse Fehlstellen an dem abgelegten Fasermaterial (15) erkannt werden.

8. Verfahren nach einem der vorhergehenden Ansprüche, **dadurch gekennzeichnet, dass** Stufen, Überlappungen, Spalten, Verwerfungen, Welligkeiten, Lufteinschlüsse, Fremdkörper, Materialablösungen, Materialansammlungen und/oder Materialfehler als Fehlstellen erkannt werden.

9. Verfahren nach einem der vorhergehenden Ansprüche, **dadurch gekennzeichnet, dass** Fehlstellen an trockenem Fasermaterial (15) oder an vorimprägniertem Fasermaterial (15) erkannt werden.

10. Verfahren nach einem der vorhergehenden Ansprüche, **dadurch gekennzeichnet, dass** während der Aufnahme der Fasermaterialoberfläche eine Relativbewegung zwischen der Fasermaterialoberfläche und zumindest einem Bildaufnahmesensor der bildbasierten Aufnahmevorrichtung (19) erzeugt wird.

11. Fehlstellenerkennungsvorrichtung zum Erkennen von Fehlstellen von auf einem Werkzeug abgelegten Fasermaterialien (15) eines Faserverbundwerkstoffes zur Herstellung eines Faserverbundbauteils, **dadurch gekennzeichnet, dass** die Fehlstellenerkennungsvorrichtung zur Durchführung des Verfahrens nach einem der Ansprüche 1 bis 10 eingerichtet ist und eine bildbasierte Aufnahmevorrichtung (19), eine Bildverarbeitungseinheit (22) und eine Auswerteeinheit (23) hierzu aufweist.

12. Verfahren zum Ablegen von Fasermaterial (15) eines Faserverbundwerkstoffes auf einem Werkzeug zur Herstellung eines Faserverbundbauteils, bei dem mittels eines Faserlegekopfes (13) einer Faserlegevorrichtung ein dem Faserlegekopf (13) kontinuierlich zugeführtes Fasermaterial (15) auf dem Werkzeug abgelegt wird, **dadurch gekennzeichnet, dass** während oder nach dem Ablegen des Fasermaterials (15) mittels des Faserlegekopfes (13) Fehlstellen gemäß dem Verfahren nach einem der Ansprüche 1 bis 10 an dem abgelegten Fasermaterial (15) erkannt werden.

13. Faserlegeanlage (10) zum Ablegen von Fasermaterial (15) eines Faserverbundwerkstoffes auf einem Werkzeug zur Herstellung eines Faserverbundbauteils mit mindestens einer einen Faserlegekopf (13) aufweisenden Faserlegevorrichtung, die eingerichtet ist, dem Faserlegekopf (13) kontinuierlich ein Fasermaterial (15) zuzuführen, wobei der Faserlegekopf (13) zum Ablegen des kontinuierlich zugeführten Fasermaterials (15) auf einem Werkzeug ausgebildet ist, **dadurch gekennzeichnet, dass** die Faserlegeanlage (10) eine Fehlstellenerkennungsvorrichtung gemäß Anspruch 11 zum Erkennen von Fehlstellen von auf dem Werkzeug abgelegtem Fasermaterial (15) hat.

14. Faserlegeanlage (10) nach Anspruch 13, **dadurch gekennzeichnet, dass** ein Bildaufnahmesensor der bildbasierten Aufnahmevorrichtung (19) der Fehlstellenerkennungsvorrichtung im Nachlauf des Faserlegekopfes (13) angeordnet ist.

## Claims

1. A method of detecting defects of fiber materials (15) of a fiber composite material deposited on a tool for manufacturing a fiber composite component, the method comprising the following steps:
- Recording a fiber material surface of the fiber material (15) deposited on the tool and generating digital image data of the fiber material surface by means of at least one image-based recording device (19);
- Normalizing the image data by increasing the variance of a frequency distribution of color-, contrast- and/or brightness-related image features of the digital image data and generating normalized image data by means of an image processing unit (22);
- Detection of defects on the deposited fiber material (15) by means of an image analysis of the normalized image data using an evaluation unit (23).

2. Method according to claim 1, **characterized in that** a height profile of the fiber material surface is determined by means of an optical light projection method by the image-based recording device (19) designed for this purpose in the form of a colour depth image or greyscale image as digital image data, in which a height level of the height profile is represented by a corresponding colour, contrast and/or brightness value.

3. The method according to claim 2, **characterized in that** the optical light projection method is a light section method in which the fiber material surface is illuminated with light from a light source from a first direction, the light reflected by the fiber material surface from another, second direction is recorded with a camera and the height profile is then determined as a function of the reflected light.

4. Method according to one of the preceding claims, **characterized in that** the normalization of the image data is carried out by an AHE (adaptive histogram equalization) image adjustment, in particular by a CLAHE (contrast-limited adaptive histogram equalization) image adjustment.

5. Method according to one of the preceding claims, **characterized in that** the image data are morphologically expanded based on a dilation matrix prior to normalization.

6. Method according to one of the preceding claims, **characterized in that**, after normalization, the image content of the normalized image data is adjusted by smoothing or blurring.

7. Method according to one of the preceding claims, **characterized in that** defects on the deposited fiber material (15) are detected by means of a previously taught machine learning method as image analysis.

8. Method according to one of the preceding claims, **characterized in that** steps, overlaps, gaps, distortions, waviness, air inclusions, foreign bodies, material detachments, material accumulations and/or material defects are detected as defects.

9. Method according to one of the preceding claims, **characterized in that** defects are detected on dry fiber material (15) or on pre-impregnated fiber material (15).

10. Method according to one of the preceding claims, **characterized in that** a relative movement between the fiber material surface and at least one image pick-up sensor of the image-based pick-up device (19) is generated during the pick-up of the fiber material surface.

11. Defect detection device for detecting defects in fiber materials (15) of a fiber composite material deposited on a tool for producing a fiber composite component, **characterized in that** the defect detection device is set up for carrying out the method according to one of claims 1 to 10 and has an image-based recording device (19), an image processing unit (22) and an evaluation unit (23) for this purpose.

12. Method for depositing fiber material (15) of a fiber composite material on a tool for producing a fiber composite component, in which a fiber material (15) continuously fed to the fiber laying head (13) is deposited on the tool by means of a fiber laying head (13) of a fiber laying device, **characterized in that,** during or after depositing the fiber material (15) by means of the fiber laying head (13), defects are detected on the deposited fiber material (15) in accordance with the method according to one of claims 1 to 10.

13. Fiber-laying plant (10) for depositing fiber material (15) of a fiber composite material on a tool for producing a fiber composite component, having at least one fiber-laying device which has a fiber-laying head (13) and is set up to feed a fiber material (15) continuously to the fiber-laying head (13), the fiber laying head (13) being designed for depositing the continuously supplied fiber material (15) on a tool, **characterized in that** the fiber laying plant (10) has a defect detection device according to claim 11 for detecting defects on the fiber material (15) deposited on the tool.

14. Fiber laying plant (10) according to claim 13, **characterized in that** an image recording sensor of the image-based recording device (19) of the defect detection device is arranged in the follow-up of the fiber laying head (13).

## Revendications

1. Procédé de détection de défauts de matières fibreuses (15), déposées sur un outil, d'un matériau composite fibreux pour la fabrication d'un composant composite fibreux, le procédé comprenant les étapes suivantes consistant à :
- enregistrer une surface de la matière fibreuse (15) déposée sur l'outil et générer des données d'image numériques de la surface de la matière fibreuse au moyen d'au moins un dispositif d'enregistrement (19) basé sur l'image ;
- normaliser les données d'image en augmentant la variance d'une distribution de fréquence de caractéristiques d'image liées à la couleur, au contraste et/ou à la luminosité des données d'image numériques, et générer des données d'image normalisées au moyen d'une unité de traitement d'image (22) ;
- détecter des défauts sur la matière fibreuse déposée (15) par une analyse d'image des données d'image normalisées au moyen d'une unité d'évaluation (23).

2. Procédé selon la revendication 1,
**caractérisé en ce qu'**un profil de hauteur de la surface de la matière fibreuse est déterminé au moyen d'un procédé optique de projection de lumière par le dispositif d'enregistrement (19) basé sur l'image conçu à cet effet, sous la forme d'une image en profondeur de couleur ou d'une image en niveaux de gris en tant que données d'image numériques, dans laquelle un niveau de hauteur du profil de hauteur est représenté par une valeur de couleur, de contraste et/ou de luminosité correspondante.

3. Procédé selon la revendication 2,
**caractérisé en ce que** le procédé optique de projection de lumière est un procédé de coupe optique dans lequel la surface de la matière fibreuse est éclairée par la lumière d'une source lumineuse provenant d'une première direction, la lumière réfléchie par la surface de la matière fibreuse provenant d'une autre, deuxième direction est enregistrée par une caméra, et le profil de hauteur est ensuite déterminé en fonction de la lumière réfléchie.

4. Procédé selon l'une des revendications précédentes,
**caractérisé en ce que** la normalisation des données d'image est effectuée par un ajustement d'image AHE (adaptive histogram equalization), en particulier par un ajustement d'image CLAHE (contrast-limited adaptive histogram equalization).

5. Procédé selon l'une des revendications précédentes,
**caractérisé en ce que**, avant la normalisation, les données d'image sont étendues morphologiquement sur la base d'une matrice de dilatation.

6. Procédé selon l'une des revendications précédentes,
**caractérisé en ce que**, après la normalisation, le contenu d'image des données d'image normalisées est adapté par lissage ou adoucissement.

7. Procédé selon l'une des revendications précédentes,
**caractérisé en ce que** des défauts sur la matière fibreuse déposée (15) sont détectés en tant qu'analyse d'image au moyen d'un procédé d'apprentissage automatique préalablement appris.

8. Procédé selon l'une des revendications précédentes,
**caractérisé en ce que** des gradins, des chevauchements, des interstices, des gauchissements, des ondulations, des inclusions d'air, des corps étrangers, des décollements de matière, des accumulations de matière et/ou des défauts de matière sont reconnus comme des défauts.

9. Procédé selon l'une des revendications précédentes,
**caractérisé en ce que** des défauts sur une matière fibreuse sèche (15) ou sur une matière fibreuse pré-imprégnée (15) sont détectés.

10. Procédé selon l'une des revendications précédentes,
**caractérisé en ce que**, pendant l'enregistrement de la surface de la matière fibreuse, un mouvement relatif est généré entre la surface de la matière fibreuse et au moins un capteur d'enregistrement d'image du dispositif d'enregistrement (19) basé sur l'image.

11. Dispositif de détection de défauts pour détecter des défauts de matières fibreuses (15), déposées sur un outil, d'un matériau composite fibreux pour la fabrication d'un composant composite fibreux,
**caractérisé en ce que** le dispositif de détection de défauts est agencé pour mettre en oeuvre le procédé selon l'une des revendications 1 à 10 et présente un dispositif d'enregistrement (19) basé sur l'image, une unité de traitement d'image (22) et une unité d'évaluation (23) à cet effet.

12. Procédé pour déposer une matière fibreuse (15) d'un matériau composite fibreux sur un outil pour la fabrication d'un composant composite fibreux, dans lequel une matière fibreuse (15) amenée en continu à une tête de dépôt de fibres (13) d'un dispositif de dépôt de fibres est déposée sur l'outil au moyen de la tête de dépôt de fibres (13),
**caractérisé en ce que** pendant ou après le dépôt de la matière fibreuse (15) au moyen de la tête de dépôt de fibres (13), des défauts sont détectés sur la matière fibreuse déposée (15) par le procédé selon l'une des revendications 1 à 10.

13. Installation de dépôt de fibres (10) pour déposer une matière fibreuse (15) d'un matériau composite fibreux sur un outil pour la fabrication d'un composant composite fibreux, comprenant au moins un dispositif de dépôt de fibres présentant une tête de dépôt de fibres (13), qui est conçu pour amener en continu une matière fibreuse (15) à la tête de dépôt de fibres (13), la tête de dépôt de fibres (13) étant conçue pour déposer la matière fibreuse (15), amenée en continu, sur un outil,
**caractérisée en ce que** l'installation de dépôt de fibres (10) comprend un dispositif de détection de défauts selon la revendication 11 pour détecter des défauts de la matière fibreuse (15) déposée sur l'outil.

14. Installation de dépôt de fibres (10) selon la revendication 13, **caractérisée en ce qu'**un capteur d'enregistrement d'image du dispositif d'enregistrement (19) basé sur l'image du dispositif de détection de défauts est disposé en aval de la tête de dépôt de fibres (13).
